# EUROPÄISCHE PATENTSCHRIFT

(11) **EP 2 865 134 B1**
(45) Veröffentlichungstag und Bekanntmachung des Hinweises auf die Patenterteilung: **08.06.2016**
(21) Anmeldenummer: 13724720.1
(22) Anmeldetag: 19.04.2013
(51) Int. Cl.: G06F 9/50, H04L 12/911, H04L 12/24

(54) **VERFAHREN UND VORRICHTUNG ZUM AUFBAU VON OPTIMALEN ZEITGESTEUERTEN PFADEN IN EINEM COMPUTERNETZWERK**
METHOD AND APPARATUS FOR CONSTRUCTING OPTIMAL TIME-CONTROLLED PATHS IN A COMPUTER NETWORK
PROCÉDÉ ET DISPOSITIF DE FORMATION DE CHEMINS OPTIMAUX CHRONOCOMMANDÉS DANS UN RÉSEAU D'ORDINATEURS

(30) Priorität: 25.06.2012 AT 7112012
(43) Veröffentlichungstag der Anmeldung: 29.04.2015
(73) Patentinhaber: FTS Computertechnik GmbH, 1040 Wien (AT)
(72) Erfinder: KOPETZ, Hermann, A-2500 Baden (AT)
(74) Vertreter: Patentanwaltskanzlei Matschnig & Forsthuber OG
(86) Internationale Anmeldenummer: PCT/AT2013/050094
(87) Internationale Veröffentlichungsnummer: WO 2014/000006

(56) Entgegenhaltungen:
- WO-A2-01/84286
- AT-A1- 506 623
- WILFRIED STEINER: "An Evaluation of SMT-Based Schedule Synthesis for Time-Triggered Multi-hop Networks", 2010 31ST IEEE REAL-TIME SYSTEMS SYMPOSIUM, 1. November 2010 (2010-11-01), Seiten 375-384, XP055072111, DOI: 10.1109/RTSS.2010.25 ISBN: 978-0-76-954298-0

## Beschreibung

Die Erfindung betrifft ein Verfahren zur dynamischen Erstellung von TT-Pfaden in einem großen Computernetzwerk bestehend aus einer Vielzahl von Rechnerknoten, Verteilereinheiten und Kommunikationskanälen, wobei alle Verteilereinheiten Zugriff auf eine globale Zeitbasis haben.

Die vorliegende Erfindung liegt im Bereich der Computertechnik. Sie beschreibt ein innovatives Verfahren wie in einem großen Rechnernetzwerk, z.B. im Internet, unter den gegebenen Voraussetzungen optimale zeitgesteuerte Kommunikationspfade zum Transport von Nachrichten mit garantiertem Zeitverhalten aufgebaut werden können.

In vielen technischen Anwendungen werden aktuelle Informationen über den Zustand einer räumlich verteilten Anlage in einer zentralen Warte benötigt. Zum Beispiel ist es bei der Steuerung des elektrischen Verteilernetzes (*smart grid*) von Vorteil, wenn innerhalb von weniger als einer Spannungsperiode (d.s., 20 Millisekunden) die Informationen über den Zustand der weit entfernten (oft hunderte von Kilometern) Sensoren und Aktuatoren verlässlich in der Zentrale verfügbar sind.

Die bestehende Infrastruktur, d.i. das Internet, das die Möglichkeit bietet, Daten zwischen angeschlossenen Rechnern auszutauschen, ist gegenwärtig nicht in der Lage, die in dieser Anwendung geforderte kurze Dauer eines Nachrichtentransports zu garantieren.

Die vorliegende Erfindung hat das Ziel, in großen Netzwerken zeitgesteuerte Pfade mit garantiertem Antwortzeitverhalten aufzubauen, so dass Anwendungen, wie das *smart grid,* über das Internet kommunizieren können.

Unter einem großen Computernetzwerk ist allgemein ein Netzwerk zu verstehen, in dem es keine zentrale Instanz gibt, welche die Steuerung des gesamten Netzwerkes vornimmt. Ein Beispiel für ein großes Computernetzwerk ist das Internet.

Die Offenbarung AT506623 A1 offenbart ein Verfahren und einen Apparat zur sicheren dynamischen Bandbreitenallokation in einem time triggered Ethernet (TT-Ethemet).

Diese Aufgabe wird mit einem eingangs erwähnten Verfahren dadurch gelöst, dass erfindungsgemäß eine *planende Instanz,* die einen zeitgesteuerten Pfad mit spezifizierten Pfadzeiteigenschaften von einem sendenden Rechnerknoten (SRK) zu einem empfangenden Rechnerknoten entlang einer bestehenden virtuellen Verbindung errichten will, zuerst von jeder in der virtuellen Verbindung angeordneten Verteilereinheit mittels einer Anforderungsnachricht alle von der Verteilereinheit bereits bestätigten TT-Pfad-Descriptor Listen (TTPDL) anfordert, anschließend die spezifizierten Pfadzeiteigenschaften und alle bestätigten TTPDLs an einen dynamischen Scheduler sendet, und wobei der dynamische Scheduler für jede in der virtuellen Verbindung angeordnete Verteilereinheit eine neue TTPDL erstellt, wobei die bestehenden reservierten TTPDLs der betroffenen Verteilereinheiten unverändert bleiben, und wobei die entsprechenden neuen TTPDLs an jede in der virtuellen Verbindung angeordnete Verteilereinheit gesendet werden, und wobei jede in der virtuellen Verbindung angeordnete Verteilereinheit den angeforderten TT-Pfad reserviert und die erfolgreiche Reservierung mittels einer Bestätigungsnachricht an die planende Instanz bestätigt.

In den bestehenden Internet Protokollen ist der Aufbau einer *Virtuellen Verbindung* zwischen zwei Endsystemen bzw. zwischen den Verteilereinheiten, die an diese Endsysteme angeschlossen sind, bereits vorgesehen. Eine virtuelle Verbindung errichtet einen Pfad von einem sendenden Rechnerknoten (SRK) zu einem oder mehreren empfangenden Rechnerknoten, wobei der Pfad über eine Vielzahl von Verteilereinheiten, die miteinander über diverse Kommunikationskanäle verbunden sind, führt. Erfindungsgemäß wird auf einem solchen vorhandenen Pfad eine zeitgesteuerte Verbindung derart aufgebaut, dass eine Nachricht vom SRK zu den Empfängern mit einer minimalen Transportzeit transportiert werden kann.

Die minimale Dauer der Übertragung einer Nachricht entlang eines Punkt-zu-Punkt Kanals wird bestimmt durch das Propagation Delay und die Bandbreite des Kanals [7]. Eine minimale Transportzeit einer Nachricht entlang eines Pfades, der aus vielen Punkt-zu-Punkt Kanälen zwischen den Verteilereinheiten besteht, wird erreicht, wenn die Phasen des Sendens der Nachricht entlang des bestehenden Pfades derart synchronisiert sind, dass keine unnötige Zwischenspeicherung der Nachricht in einer Verteilereinheit entlang des Pfades vorgenommen werden muss. Um dies zu erreichen wird erfingdungsgemäß für jede Verteilereinheit entlang des Pfades *a priori* ein Zeitplan erstellt, der die konfliktfreie Vermittlung und Weiterleitung aller von dieser Verteilereinheit zu vermittelnden zeitgesteuerten Nachrichten ermöglicht. Dies setzt voraus, dass alle betroffenen Verteilereinheiten Zugriff auf eine globale Zeit haben [7]. Eine solche globale Zeit kann z.B. durch die Synchronisation über die am ganzen Globus verfügbaren GPS Signale erfolgen.

Da es in einem großen Computernetzwerk, wie dem Internet, keine Zentrale und keine globale Sicht des gesamten Systemzustandes gibt, wird im hier offen gelegten Verfahren eine skalierbare dezentrale Lösung vorgeschlagen. Der Ausgangspunkt ist der gleiche wie in [6], wo entlang einer vorgegeben virtuellen Verbindung ein zeitgesteuerter Pfad errichtet wird. Im Unterschied zu [6] wird die Planung des zeitgesteuerten Pfades (des *TT-Pfads*) nicht von den Verteilereinheiten vorgenommen, sondern von einem Scheduler, dem alle Informationen über die bestätigten Reservierungen der entlang der Pfad angeordneten Verteilereinheiten (Switches) sowie die Parameter des gewünschten zeitgesteuerten Pfades zur Verfügung gestellt werden. Der Scheduler verfügt somit über alle Informationen, die erforderlich sind, um unter den gegebenen Randbedingungen der bestehenden zeitgesteuerten Verbindungen einen optimalen TT-Pfad zu finden.

Weder in der Patentliteratur [1-5] noch in der wissenschaftlichen Literatur wurden Hinweise gefunden, die den dynamischen Aufbau eines zeitgesteuerten Pfades in einem großen Computernetzwerk, wie das Internet, betreffen.

Die vorliegende Erfindung legt gemäß Anspruch 1 ein Verfahren offen, wie in einem großen Computernetzwerk, wie z.B. dem Internet, entlang einer bestehenden virtuellen Verbindung ein optimaler zeitgesteuerter Kanal aufgebaut werden kann, der die konfliktfreie Vermittlung und sofortige Weiterleitung der a priori geplanten zeitgesteuerten Nachrichten ermöglicht.

Weiters betrifft die Erfindung eine Planende Instanz gemäß Anspruch 9 zur Verwendung in einem oben beschriebenen Verfahren.

Vorzugsweise ist die Planende Instanz als sendender Rechnerknoten, als eine ausgezeichnete Verteilereinheit, als Systemadministrator oder als anderer ausgewählter Rechnerknoten ausgebildet ist, bzw. wird ihre Funktion von dem sendenden Rechnerknoten, einer ausgezeichneten Verteilereinheit, einem Systemadministrator oder einem anderen ausgewählten Rechnerknoten realisiert.

Ein vorteilhafter Aspekt ist ein Scheduler zur Verwendung in einem oben beschriebenen Verfahren.

Der Scheduler kann bei einer Ausführungsform der Erfindung mit der planenden Instanz in gemeinsamer Hardware realisiert sein.

Mit Vorteil kann vorgesehen sein, dass der Scheduler getrennt von der planenden Instanz ausgebildet ist.

Dabei kann es insbesondere von Vorteil sein, wenn der Scheduler bzw. seine Funktionen in einer Cloud des Computernetzwerkes realisiert sind. Bei dieser Ausführungsform wird die Funktionalität des Schedulers von Rechenzentren, welche über das Netzwerk angesprochen werden, realisiert ("Cloud Computing").

Ein weiterer vorteilhafter Aspekt ist ein Computernetzwerk, insbesondere ein großes Computernetzwerk bestehend aus einer Vielzahl von Rechnerknoten, Verteilereinheiten und Kommunikationskanälen, wobei alle Verteilereinheiten Zugriff auf eine globale Zeitbasis haben, zur Durchführung eines oben beschriebenen Verfahrens.

Weitere vorteilhafte Ausgestaltungen der Erfindung sind wie folgt beschrieben, die zusätzlich, alternativ oder in beliebiger Kombination miteinander realisiert sein können. Dabei kann vorgesehen sein, dass
*) eine Reservierung eines TT-Pfades in einer Verteilereinheit für ein zukünftiges *Reservierungsintervall* mit spezifiziertem Anfangszeitpunkt und Endzeitpunkt vorgenommen wird;
*) eine Reservierung eines TT-Pfades in einer Verteilereinheit zu einem gegebenen Zeitpunkt *aktiv* oder *passiv* sein kann, wobei eine Umschaltung vom passiven zum aktiven Zustand und umgekehrt durch eine Aktivierungsnachricht an die betroffene Verteilereinheit ausgelöst wird;
*) nach der Aufforderung an eine Verteilereinheit, alle bestätigten TTPDLs an eine planende Instanz zu senden, in der Verteilereinheit ein *Reservierungstimeout* gestartet wird, während dem keine weiteren derartigen Aufforderungen bedient werden dürfen;
*) der Ausfall einer Verteilereinheit durch das Ausbleiben der durch die Verteilereinheit periodisch zu sendenden *Alive*-*Nachrichten* erkannt wird;
*) nach dem transienten Ausfall und Wiederanlauf einer Verteilereinheit während eines spezifizierten *Reintegrationsintervall* die Verteilereinheit keine neue Reservierung vornimmt, und wobei alle planenden Instanzen ihre bestätigten aktiven und passiven Reservierungen periodisch mit einer Periode, die kleiner ist als das Reintegrationsintervall, an die betroffenen Verteilereinheiten senden;
*) der Aufbau eines zeitgesteuerten Pfades durch die Verteilereinheit vorgenommen wird, die mit dem SRK direkt verbunden ist.
*) die Kommunikation zwischen der planenden Instanz und den Verteilereinheiten durch kryptographische Verfahren gesichert wird.

Die vorliegende Erfindung wird an Hand der folgenden Zeichnung im Detail erklärt. In dieser zeigt
Fig. 1 eine zyklische Darstellung des Fortschreitens der Echtzeit, und
Fig. 2 die Struktur eines kleinen Teils eines großen Netzwerkes und einen zwischen zwei Endsystemen vorhandenen Pfad.

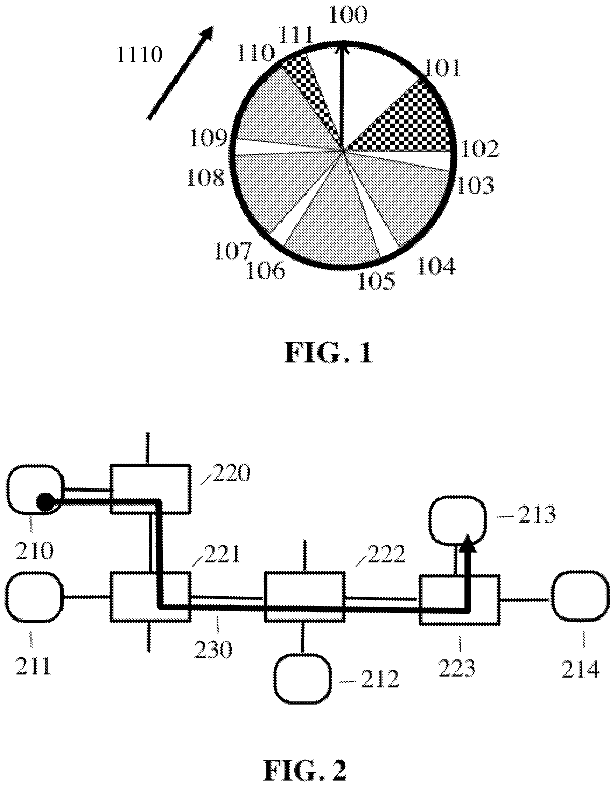

Fig. 1 veranschaulicht eine zyklische Darstellung des Fortschreitens der Echtzeit. In dieser Darstellungsform wird das Fortscheiten der Echtzeit in der Form von Perioden und Phasen dargestellt. In Fig. 1 schreitet die Zeit im Uhrzeigersinn **1110** voran. Der Beginn einer Periode ist zum Zeitpunkt **100** mit der globalen Zeit synchronisiert. Ein Ereignis, das innerhalb einer Periode auftritt (z.B. das Ereignis **101)** wird durch die Angabe des Winkels, d.i. die *Phase,* zwischen dem Beginn der Periode **100** und dem Ereignis **101** charakterisiert. Wenn die Zeit eine volle Periode-d.i. einen Winkel von 360 Grad-durchlaufen hat, so beginnt die *Folgeperiode.* In der Folgeperiode haben die zeitgesteuerten Aktionen die gleiche Phase wie in der vorangegangenen Periode. Das zyklische Bild des Fortschreitens der Echtzeit eignet sich besonders gut, um periodische Prozesse, wie sie in zeitgesteuerten Echtzeitsystemen auftreten, darzustellen.

Fig. 2 zeigt einen kleinen Teil eines großen Computernetzwerkes. In Fig. 2 sind die fünf Endsysteme **210, 211, 212, 213, 214** und die vier Verteilereinheiten **220, 221, 222, 223** dargestellt. Zusätzlich ist in Fig. 2 der Pfad **230** vom Endsystem **210,** dem sendenden Rechnerknoten (SRK), über die Verteilereinheiten (Switches) **220, 221, 222** und **223** zum Endsystem **213** in eingetragen.

Der zeitliche Ablauf einer Nachrichtenübertragung entlang des Pfades **130** ist in Fig. 1 dargestellt. Zum Zeitpunkt **101** beginnt das Endsystem **210,** der sendende Rechnerknoten (SRK), mit der Übertragung einer Nachricht. Zum Zeitpunkt **102** trifft das erste Bit dieser Nachricht bei der Verteilereinheit **220** ein. Die Nachricht verweilt in der Verteilereinheit bis zum Zeitpunkt **103,** zu dem das erste Bit der Nachricht die Verteilereinheit **220** in Richtung Verteilereinheit **221** verlässt. Zum Zeitpunkt **104** trifft das erste Bit der Nachricht bei der Verteilereinheit **221** ein. Der beschriebene Vorgang wiederholt sich bis zum Zeitpunkt **108,** zu dem die Nachricht bei der Verteilereinheit **223** unmittelbar vor dem empfangenden Endsystem **213** eintrifft. Die Übertragung der Nachricht ist zum Zeitpunkt **111,** dem Zeitpunkt zu dem das letzte Bit der Nachricht beim Endsystem **213** eingetroffen ist, abgeschlossen. Das Zeitintervall **(110,111)** bezeichnen wir als *Endlatenz*.

Im Folgenden werden weitere Begriffe, die in diesem Dokument verwendet werden, erklärt. Ein zeitgesteuerter Pfad zwischen zwei Endsystemen ist gekennzeichnet durch die genaue Spezifikation des *Reservierungszeitintervalls* (d.i. das Zeitintervall, während dem die zeitgesteuerte Verbindung benötigt wird), der *Phase und Periode am Beginn* des Pfades, der *Phase und Periode am Ende* des Pfades, und der *Länge* [Bit] *einer zeitgesteuerten Nachricht.* Diese Parameter bestimmen die *Echtzeiteigenschaften* eines zeitgesteuerten Pfades.

Wenn das Endsystem **210** entlang der virtuellen Verbindung **230** einen zeitgesteuerten Pfad für einen Datenstrom zu errichten beabsichtigt, so wird folgendes Verfahren abgewickelt.

Zuerst sendet eine *planende Instanz* eine *Anforderungsnachricht* an alle entlang des Pfades angeordneten Verteilereinheiten, d.s. in Fig. 2 die Verteilereinheiten **220, 221, 222,** und **223,** mit der Aufforderung, alle für das geplante zukünftige Reservierungsintervall in der Vergangenheit bestätigten aktiven und passiven *Reservierungen* von zeitgesteuerten Pfaden an die planende Instanz mitzuteilen. Die *planende Instanz* kann der sendende Rechnerknoten SRK, eine spezielle Verteilereinheit, der Systemadministrator oder ein anderer ausgewählter Rechnerknoten sein.

Eine Reservierung für einen zeitgesteuerten Pfad in einer Verteilereinheit ist in der *TT-Pfad-Descriptor Liste (TTPDL)* festgehalten. Die TTPDL enthält:
- *Reservierungszeitintervall*, d.i., das Zeitintervall während dem die zeitgesteuerte Nachricht vermittelt werden soll
- Zeitpunkt (Periode, Phase) des erwarteten Eintreffens der zeitgesteuerten Nachricht am *Input Port* der Verteilereinheit
- Zeitpunkt (Periode, Phase) des Sendens der ausgehenden Nachricht vom *Output Port* der Verteilereinheit
- Angabe, ob das *Reservierungszeitintervall* aktiv oder passiv ist.

Eine TTPDL ist während des *Reservierungszeitintervalls aktiv,* wenn in diesem Intervall zeitgesteuerte Nachrichten erwartet werden. Eine TTPDL ist während des *Reservierungsintervalls passiv,* wenn eine Reservierung vorgenommen und bestätigt wurde, aber gegenwärtig keine zeitgesteuerte Nachricht erwartet wird. Eine passive *TTPDL* kann durch eine Aktivierungsnachricht an die betroffene Verteilereinheit von der *planenden Instanz* aktiviert werden. Eine passive *TTPDL* ermöglicht eine schnelle Aktivierung eines vorab geplanten zeitgesteuerten Pfades, z.B. um nach Auftreten eines Ausfalls einer Verteilereinheit sehr schnell eine neue zeitgesteuerte Verbindung zur Verfügung zu haben. Solange eine TTPDL passiv ist, kann die zur Verfügung stehende Bandbreite für ereignisgesteuerte Nachrichten verwendet werden.

Das Konzept der passiven TTPDLs kann auch verwendet werden, um in einer oder mehreren Verteilereinheiten zeitgesteuerte Kanäle vorab zu konfigurieren, so dass bei Bedarf diese Kanäle sofort durch *Aktivierungsnachrichten* aktiviert werden können. Damit kann die Installation und Erweiterung von zeitgesteuerten Systemen wesentlich vereinfacht werden.

Nach Abschluss der Anforderungsphase enthält die planende Instanz alle Informationen über die bestätigten Reservierungen für zeitgesteuerte Nachrichten entlang des gewünschten Pfades. Diese Information werden, zusammen mit den *spezifizierten Pfadeigenschaften* des gewünschten neuen zeitgesteuerten Pfades (Reservierungszeitintervall, Periode, Phase, Nachrichtenlänge) an einen Scheduler gesendet, der einen unter den gegebenen Reservierungsbedingungen optimalen Zeitplan für alle betroffenen Verteilereinheiten errechnet. Dabei darf der Scheduler die bestätigten Reservierungen nicht ändern. Die bestätigten Reservierungen stellen somit die Randbedingungen für die Errechnung des neuen Zeitplans dar. Im Unterschied zu [6] verfügt der Scheduler über alle notwendigen Informationen, um einen optimalen Zeitplan erstellen zu können.

Der Scheduler ist typischerweise von der planenden Instanz getrennt ausgebildet. Beispielsweise läuft der Scheduler auf einer von der planenden Instanz getrennten Hardware ab.

Der Scheduler kann aber auch Teil der planenden Instanz sein, d.h. jene Hardware, welche die planende Instanz realisiert bzw. welche als planende Instanz agiert, agiert auch als Scheduler. In diesem Fall bedeutet die Formulierung in Anspruch 1, dass die planenden Instanz "die spezifizierten Pfadzeiteigenschaften und alle bestätigten TTPDLs" an den Scheduler "sendet", dass die planende Instanz diese Eigenschaften und TTPDLs an den Scheduler übergibt.

Nach Erstellung des Zeitplans durch den Scheduler und der Festlegung der neuen TTPDLS für die gewünschte Verbindung sendet der Scheduler bzw. die planende Instanz diese neuen TTPDLs an die betroffenen Verteilereinheiten, um die Reservierung zu fixieren. Die betroffenen Verteilereinheiten antworten mit einer *Bestätigungsnachricht,* um der planenden Instanz die Bestätigung des neuen zeitgesteuerten Pfades mitzuteilen.

Während eines vorab festgelegten *Reservierungstimeout* darf keine der entlang des gewünschten Pfades angeordneten Verteilereinheit eine weitere Reservierungsanfrage positiv beantworten. Innerhalb des Reservierungstimeout muss den betroffenen Verteilereinheiten die neuen TTPDLs mitgeteilt werden, weil nach Ablaufen des *Reservierungstimeouts* die Blockierung weiterer Anfragen aufgehoben wird.

Wenn eine entlang des zeitgesteuerten Pfades angeordnete Verteilereinheit ausfällt, so kann die planende Instanz die bereits entlang eines alternativen Pfad geplanten passiven TTPDLs aktivieren, um schnell eine neue zeitgesteuerte Verbindung bereitstellen zu können.

Die Erkennung des Ausfalls einer Verteilereinheit erfolgt über ein *Membershipprotokoll* [7], das vorsieht, dass jede in einem zeitgesteuerten Pfad involvierte Verteilereinheit periodisch mit einer vorab festgelegten Periode, der *Membershiplatenz,* eine *alive Nachricht* an die planende Instanz sendet. Wenn eine alive Nachricht ausbleibt, so wird ein Ausfall der Verteilereinheit angenommen.

Erfahrungsgemäß ist ein Ausfall einer Verteilereinheit in den meisten Fällen transient, d.h., nach einem *Reset* der Verteilereinheit ist die Funktion der Verteilereinheit wieder gegeben. Da nach einem *Reset* alle in der Verteilereinheit gespeicherten TTPDLs verloren gehen, wird durch folgendes innovatives Verfahren der Wiederanlauf einer Verteilereinheit unterstützt. Unmittelbar nach dem *Restart* einer ausgefallen Verteilereinheit wird ein *Reintegrationstime-out* gestartet. Während des Reintegrationstimeouts darf die wieder anlaufende Verteilereinheit keine neuen Reservierungen annehmen. Erfindungsgemäß senden alle planenden Instanzen die sie betreffenden TTPDLs in einer periodischen Nachricht, wobei die Periode kürzer ist als das Reintegrationstimeout, an alle betroffenen Verteilereinheiten. Somit ist gewährleistet, dass eine wiederanlaufende Verteilereinheit spätestens nach dem Reintegrationstimeout ihren verlorenen inneren Zustand wieder hergestellt hat.

In einer speziellen Implementierung ist es möglich, dass eine mit dem SRK direkt verbundene Verteilereinheit die beschriebenen Aufgaben der planenden Instanz durchführt. Damit wird der Aufbau der zeitgesteuerten Verbindung in das Rechnernetz verlagert, so dass die an das Netzwerkt angebundenen Rechnerknoten mit minimalen Aufwand in das zeitgesteuerte Netzwerk integriert werden können.

Um zu verhindern, dass ein Intruder den Aufbau von zeitgesteuerten Verbindungen stört, kann der Verkehr zwischen der planenden Instanz und den Verteilereinheiten durch ein dem Stand der Technik entsprechendes kryptographisches Verfahren gesichert werden.

Beim Einsatz von FPGAs und ASICS ist es möglich, Teile des beschriebenen Verfahrens direkt in der Hardware zu realisieren.

Die vorliegende Erfindung legt somit ein Verfahren offen, wie in einem großen Computernetzwerk, wie z.B. dem Internet, entlang einer bestehenden virtuellen Verbindung ein optimaler zeitgesteuerter Kanal aufgebaut werden kann, der die konfliktfreie Vermittlung und sofortige Weiterleitung der a priori geplanten zeitgesteuerten Nachrichten ermöglicht.

### Zitierte Literatur:

[1] US 7,839,868. Kopetz, H. *Communication method and system for the transmission of time*-*driven and event-driven Ethernet messages.* Granted November 23, 2010.
[2] US 20100220744, Ungerman, J., *Intelligent Star Coupler for time-triggered communication protocol and method for communicating between nodes with a network using a time triggered protocol.* Publication Date September 2, 2010.
[3] US 20060242252, Jiang, S., *Extensible Scheduling of Messages on Time-Triggered Busses.* Publication Date Oct 26, 2006.
[4] US 20110066854; Poledna, S., *Method for Secure Dynamic Bandwidth Allocation in TT Ethernet*. Publication Date March 17, 2011
[5] US 20110032833 Zhang et al. *Optimizing of Traffic Routing for Data Center Services.* Publication Date Feb. 10. 2011
[6] Österreichische Patentanmeldung A 474/2012 der Fa. FTS Computertechnik v. 19. 4. 2012 *Selbstorganisierendes Verfahren zum Aufbau von deterministischen Routen in einem großen Computernetzwerk.*
[7] Kopetz, H. Real-Time Systems, Design Principles for Distributed Embedded Applications. Springer Verlag. 2011.

## Patentansprüche

1. Verfahren zur dynamischen Erstellung von zeitgesteuerten Pfaden, TT-Pfaden, in einem Computernetzwerk bestehend aus einer Vielzahl von Rechnerknoten, Verteilereinheiten und Kommunikationskanälen, wobei alle Verteilereinheiten Zugriff auf eine globale Zeitbasis haben, wobei eine *planende Instanz,* die einen zeitgesteuerten Pfad mit spezifizierten Pfadzeiteigenschaften von einem sendenden Rechnerknoten (SRK) zu einem empfangenden Rechnerknoten entlang einer bestehenden virtuellen Verbindung errichten will, zuerst von jeder in der virtuellen Verbindung angeordneten Verteilereinheit mittels einer Anforderungsnachricht alle von der Verteilereinheit bereits bestätigten TT-Pfad-Descriptor Listen (TTPDL) anfordert, wobei eine TTPDL enthält:
• ein *Reservierungszeitintervall,* d.i., das Zeitintervall während dem eine zeitgesteuerte Nachricht vermittelt werden soll,
• einen Zeitpunkt des erwarteten Eintreffens der zeitgesteuerten Nachricht an einem *Input Port* der Verteilereinheit,
• einen Zeitpunkt des Sendens einer ausgehenden Nachricht von einem *Output Port* der Verteilereinheit, und
• eine Angabe, ob die TTPDL während des Reservierungszeitintervalls aktiv oder passiv ist,
wobei die TTPDL während des Reservierungsintervalls aktiv ist, wenn in diesem Intervall zeitgesteuerte Nachrichten erwartet werden, und wobei die TTPDL während des Reservierungsintervalls passiv ist, wenn eine Reservierung vorgenommen und bestätigt wurde, aber gegenwärtig keine zeitgesteuerte Nachricht erwartet wird, wobei die planende Instanz anschließend die spezifizierten Pfadzeiteigenschaften und alle bestätigten TTPDLs an einen dynamischen Scheduler sendet, und wobei der dynamische Scheduler für jede in der virtuellen Verbindung angeordnete Verteilereinheit eine neue TTPDL erstellt, wobei die bestehenden reservierten TTPDLs der betroffenen Verteilereinheiten unverändert bleiben, und wobei die entsprechenden neuen TTPDLs an jede in der virtuellen Verbindung angeordnete Verteilereinheit gesendet werden, und wobei jede in der virtuellen Verbindung angeordnete Verteilereinheit einen angeforderten TT-Pfad gemäß den neuen TTPDLs reserviert und die erfolgreiche Reservierung mittels einer Bestätigungsnachricht an die planende Instanz bestätigt.

2. Verfahren nach Anspruch 1, **dadurch gekennzeichnet, dass** eine Reservierung eines TT-Pfades in einer Verteilereinheit für ein zukünftiges *Reservierungsintervall* mit spezifiziertem Anfangszeitpunkt und Endzeitpunkt vorgenommen wird.

3. Verfahren nach Anspruch 1 oder 2, **dadurch gekennzeichnet, dass** eine Reservierung eines TT-Pfades in einer Verteilereinheit zu einem gegebenen Zeitpunkt *aktiv* oder *passiv* sein kann, wobei eine Umschaltung vom passiven zum aktiven Zustand und umgekehrt durch eine Aktivierungsnachricht an die betroffene Verteilereinheit ausgelöst wird.

4. Verfahren nach einem der Ansprüche 1 bis 3, **dadurch gekennzeichnet, dass** nach der Aufforderung an eine Verteilereinheit, alle bestätigten TTPDLs an eine planende Instanz zu senden, in der Verteilereinheit ein *Reservierungstimeout* gestartet wird, während dem keine weiteren derartigen Aufforderungen bedient werden dürfen.

5. Verfahren nach einem der Ansprüche 1 bis 4, **dadurch gekennzeichnet, dass** der Ausfall einer Verteilereinheit durch das Ausbleiben der durch die Verteilereinheit periodisch zu sendenden *Alive-Nachrichten* erkannt wird.

6. Verfahren nach einem der Ansprüche 1 bis 5, **dadurch gekennzeichnet, dass** nach dem transienten Ausfall und Wiederanlauf einer Verteilereinheit während eines spezifizierten *Reintegrationsintervall* die Verteilereinheit keine neue Reservierung vornimmt, und wobei alle planenden Instanzen ihre bestätigten aktiven und passiven Reservierungen periodisch mit einer Periode, die kleiner ist als das Reintegrationsintervall, an die betroffenen Verteilereinheiten senden.

7. Verfahren nach einem der Ansprüche 1 bis 6, **dadurch gekennzeichnet, dass** der Aufbau eines zeitgesteuerten Pfades durch die Verteilereinheit vorgenommen wird, die mit dem SRK direkt verbunden ist.

8. Verfahren nach einem der Ansprüche 1 bis 7, **dadurch gekennzeichnet, dass** die Kommunikation zwischen der planenden Instanz und den Verteilereinheiten durch kryptographische Verfahren gesichert wird.

9. Planende Instanz zur Verwendung in einem Verfahren nach einem der Ansprüche 1 bis 8.

10. Planende Instanz nach Anspruch 9, **dadurch gekennzeichnet, dass** sie als sendender Rechnerknoten, als eine ausgezeichnete Verteilereinheit, als Systemadministrator oder als anderer ausgewählter Rechnerknoten ausgebildet ist oder dass ihre Funktion von dem sendenden Rechnerknoten, einer ausgezeichneten Verteilereinheit, einem Systemadministrator oder einem anderen ausgewählten Rechnerknoten realisiert wird.

11. Computernetzwerk bestehend aus einer Vielzahl von Rechnerknoten, Verteilereinheiten und Kommunikationskanälen, wobei alle Verteilereinheiten Zugriff auf eine globale Zeitbasis haben, zur Durchführung eines Verfahrens nach einem der Ansprüche 1 bis 8, wobei das Computernetzwerk eine planende Instanz nach Anspruch 9 oder 10 umfasst.

## Claims

1. A method for the dynamic creation of time-controlled paths, TT-paths, in a computer network consisting of a plurality of computer nodes, distribution modules and communication channels, wherein all distribution modules have access to a global time base,
**characterised in that**
a *scheduling instance,* which is aimed at establishing a time-controlled path with specified path time characteristics from a transmitting computer node (SRK) to a receiving computer node along an existing virtual connection, firstly, by means of a request message, requests from each distribution module arranged in the virtual connection all the TT-path-descriptor-lists (TTPDL) already confirmed by said distribution modules, wherein a TTPDL comprises:
• a reservation interval, that is to say the interval during which the time-controlled message is to be conveyed,
• a moment of the expected arrival of the time-controlled message at the input port of the distribution module,
• a moment of the transmission of the outgoing message from the output port of the distribution module, and
• a specification as to whether the reservation interval is active or passive,
wherein the TTPDL is active during the reservation interval if time-controlled messages are expected in this interval, and wherein the TTPDL is passive during the reservation interval, when a reservation has been made and confirmed, but no time-controlled message is currently expected, and wherein the scheduling instance then transmits the specified path time characteristics and all confirmed TTPDLs to a dynamic scheduler, and wherein the dynamic scheduler creates a new TTPDL for each distribution module arranged in the virtual connection, wherein the existing reserved TTPDLs of the distribution modules affected remain unchanged, and wherein the corresponding new TTPDLs are transmitted to each distribution module arranged in the virtual connection, and wherein each distribution module arranged in the virtual connection reserves the TT-path requested and confirms the successful reservation according to the new TTPDLs to the scheduling instance by means of a confirmation message.

2. The method according to Claim 1, **characterised in that** a reservation of a TT path in a distribution module is performed for a future *reservation interval* with specified start point and end point.

3. The method according to Claim 1 or 2, **characterised in that a** reservation of a TT path in a distribution module at a given moment in time can be *active* or *passive,* wherein a switchover from the passive to the active state and vice versa is triggered by an activation message to the distribution module affected.

4. The method according to one of Claims 1 to 3, **characterised in that** following the request to a distribution module to transmit all confirmed TTPDLs to a scheduling instance, a *reservation timeout* is started in the distribution module, during which no further requests of this type may be handled.

5. The method according to one of Claims 1 to 4, **characterised in that** the failure of a distribution module is identified by the absence of the *alive messages* to be transmitted periodically by the distribution module.

6. The method according to one of Claims 1 to 5, **characterised in that** following the transient failure and restart of a distribution module during a specified *reintegration interval,* the distribution module does not perform a new reservation, and wherein all scheduling instances transmit, to the distribution modules affected, their confirmed active and passive reservations periodically with a period that is smaller than the reintegration interval.

7. The method according to one of Claims 1 to 6, **characterised in that** the construction of a time-controlled path is performed by the distribution module, which is directly connected to the SRK.

8. The method according to one of Claims 1 to 7, **characterised in that** the communication between the scheduling instance and the distribution modules is secured by cryptographic methods.

9. A scheduling instance for use in a method according to one of Claims 1 to 8.

10. The scheduling instance according to Claim 9, **characterised in that** it is configured as a transmitting computer node, as a distinguished distribution module, as a system administrator or as another selected computer node, or **characterised in that** the function thereof is performed by the transmitting computer node, a distinguished distribution module, a system administrator or another selected computer node.

11. A computer network consisting of a plurality of computer nodes, distribution modules and communication channels, wherein all distribution modules have access to a global time base, for carrying out a method according to one of Claims 1 to 8, wherein the computer network comprises a scheduling instance according to claim 9 or 10.

## Revendications

1. Procédé de création dynamique de trajets commandés en temps, trajets TT, dans un réseau informatique composé d'une pluralité de noeuds d'ordinateur, d'unités de distribution et de canaux de communication, toutes les unités de distribution ayant accès à une base de temps globale,
**dans lequel**
une *instance de planification,* laquelle est destinée à établir un trajet commandé en temps ayant des caractéristiques temporelles de trajet spécifiées d'un noeud d'ordinateur émetteur (SRK) à un noeud d'ordinateur récepteur le long d'une liaison virtuelle existante, demande d'abord, au moyen d'un message de demande, à chaque unité de distribution disposée dans la liaison virtuelle, toutes les listes de descripteurs de trajets TT (TTPDL) déjà confirmées par l'unité de distribution, une TTPDL contenant :
• un *intervalle de temps de réservation,* c'est-à-dire l'intervalle de temps pendant lequel un message commandé en temps doit être transmis,
• un instant d'arrivée prévue du message commandé en temps à un *port d'entrée* de l'unité de distribution,
• un instant d'envoi d'un message sortant à partir d'un *port de sortie* de l'unité de distribution, et
• une indication pour savoir si la TTPDL est active ou passive pendant l'intervalle de temps de réservation,
la TTPDL étant active pendant l'intervalle de réservation si des messages commandés en temps sont attendus dans cet intervalle, et la TTPDL étant passive pendant l'intervalle de réservation si une réservation a été faite et confirmée, mais qu'aucun message commandé en temps n'est attendu à ce moment-là, l'instance de planification envoyant ensuite les caractéristiques temporelles de trajets spécifiées et toutes les TTPDL confirmées à un planificateur dynamique, et le planificateur dynamique créant une nouvelle TTPDL pour chaque unité de distribution disposée dans la liaison virtuelle, les TTPDL réservées existantes des unités de distribution concernées restant inchangées, et les nouvelles TTPDL correspondantes étant envoyées à chaque unité de distribution disposée dans la liaison virtuelle, et chaque unité de distribution disposée dans la liaison virtuelle réservant un trajet TT demandé selon les nouvelles TTPDL et confirmant la réservation réussie au moyen d'un message de confirmation à l'instance de planification.

2. Procédé selon la revendication 1, **caractérisé par le fait qu**'une réservation d'un trajet TT dans une unité de distribution est effectuée pour un *intervalle de réservation* futur ayant un instant de début et un instant de fin spécifiés.

3. Procédé selon l'une des revendications 1 ou 2, **caractérisé par le fait qu'**une réservation d'un trajet TT dans une unité de distribution peut être *active* ou *passive* à un instant donné, une commutation de l'état passif à actif, et inversement, étant déclenchée par un message d'activation à l'unité de distribution concernée.

4. Procédé selon l'une des revendications 1 à 3, **caractérisé par le fait qu**'après l'invitation à une unité de distribution d'envoyer toutes les TTPDL confirmées à une instance de planification, un *délai d'attente de réservation* est démarré dans l'unité de distribution, pendant lequel aucune autre telle invitation ne peut être traitée.

5. Procédé selon l'une des revendications 1 à 4, **caractérisé par le fait que** l'échec d'une unité de distribution est détecté par l'absence des *messages vivants* à transmettre périodiquement par l'unité de distribution.

6. Procédé selon l'une des revendications 1 à 5, **caractérisé par le fait qu**'après l'échec transitoire et le redémarrage d'une unité de distribution pendant un *intervalle* de *réintégration* spécifié, l'unité de distribution n'effectue aucune nouvelle réservation, et toutes les instances de planification envoyant périodiquement aux unités de distribution concernées leurs réservations actives et passives confirmées avec une période qui est plus petite que l'intervalle de réintégration.

7. Procédé selon l'une des revendications 1 à 6, **caractérisé par le fait que** la construction d'un trajet commandé en temps est effectuée par l'unité de distribution, laquelle est reliée directement au SRK.

8. Procédé selon l'une des revendications 1 à 7, **caractérisé par le fait que** la communication entre l'instance de planification et les unités de distribution est sécurisée par des procédés cryptographiques.

9. Instance de planification pour une utilisation dans un procédé selon l'une des revendications 1 à 8.

10. Instance de planification selon la revendication 9, **caractérisée par le fait qu**'elle est conçue sous forme de noeud d'ordinateur émetteur, sous forme d'une unité de distribution distinguée, sous forme d'administrateur système ou sous forme d'un autre noeud d'ordinateur choisi, ou par le fait que sa fonction est réalisée par le noeud d'ordinateur émetteur, une unité de distribution distinguée, un administrateur système ou un autre noeud d'ordinateur choisi.

11. Réseau informatique composé d'une pluralité de noeuds d'ordinateur, d'unités de distribution et de canaux de communication, dans lequel toutes les unités de distribution ont accès à une base de temps globale, pour effectuer un procédé selon l'une des revendications 1 à 8, le réseau informatique comprenant une instance de planification selon l'une des revendications 9 ou 10.
